(19) Europäisches Patentamt / European Patent Office / Office européen des brevets

(11) **EP 4 583 345 A1**

(12) **EUROPEAN PATENT APPLICATION**
published in accordance with Art. 153(4) EPC

(43) Date of publication:
**09.07.2025 Bulletin 2025/28**

(21) Application number: **23858624.2**

(22) Date of filing: **24.03.2023**

(51) International Patent Classification (IPC):
**H02J 3/28** (2006.01)   **H02J 3/46** (2006.01)
**G06N 3/12** (2023.01)

(52) Cooperative Patent Classification (CPC):
**G06N 3/12; G06N 3/126;** Y02E 70/30

(86) International application number:
**PCT/CN2023/083588**

(87) International publication number:
**WO 2024/045582 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 CN 202211058430**

(71) Applicant: **Huaneng Clean Energy Research
Institute
Beijing 102209 (CN)**

(72) Inventors:
• **XU, Ruochen
  Beijing 102209 (CN)**
• **LIU, Mingyi
  Beijing 102209 (CN)**

• **CAO, Chuanzhao
  Beijing 102209 (CN)**
• **CAO, Xi
  Beijing 102209 (CN)**
• **SUN, Zhouting
  Beijing 102209 (CN)**
• **LIU, Dawei
  Beijing 102209 (CN)**
• **ZHU, Yong
  Beijing 102209 (CN)**
• **PEI, Jie
  Beijing 102209 (CN)**
• **ZHANG, Jiangtao
  Beijing 102209 (CN)**
• **WANG, Jiayun
  Beijing 102209 (CN)**

(74) Representative: **Albert Catala, Andrea
  Calle Albacete 15 3
  46007 Valencia (ES)**

(54) **ENERGY STORAGE CAPACITY OPTIMIZATION CONFIGURATION METHOD AND APPARATUS FOR OPTICAL STORAGE SYSTEM, AND DEVICE AND STORAGE MEDIUM**

(57)     An optimal configuration method and device for energy storage capacity of an optical storage system, and apparatus and storage medium are provided, and relates to the photovoltaic field. The specific steps includes: obtaining original output data of a photovoltaic power station for step output; constructing a model of genetic algorithm, and determining algorithm parameters and a fitness function of the genetic algorithm; performing optimization operation based on the genetic algorithm and the original output data to obtain a recommended energy storage capacity, and building an energy storage device according to the recommended energy storage capacity.

```
┌─────────────────────────────────────────────────────────────┐ — 101
│ obtain original output data of a photovoltaic power station  │
│ for step output                                              │
└─────────────────────────────────────────────────────────────┘
                            │
                            ▼
┌─────────────────────────────────────────────────────────────┐ — 102
│ construct a model of genetic algorithm, and determine        │
│ algorithm parameters and a fitness function of the genetic   │
│ algorithm                                                    │
└─────────────────────────────────────────────────────────────┘
                            │
                            ▼
┌─────────────────────────────────────────────────────────────┐ — 103
│ perform optimization operation based on the genetic algorithm│
│ and the original output data to obtain a recommended energy  │
│ storage capacity, and build an energy storage device         │
│ according to the recommended energy storage capacity         │
└─────────────────────────────────────────────────────────────┘
```

FIG. 1

## Description

## TECHNICAL FIELD

The disclosure relates to the technical field of new energy, in particular to an optimal configuration method and device for energy storage capacity of an optical storage system, and apparatus and storage medium.

## BACKGROUND

In recent years, with the rapid development of renewable energy power generation technology, it has become an important research direction of power system development to improve the energy allocation structure reasonably and ensure the safe and reliable operation of power network under the background of a large number of new energy sources grid-connected power generation. Among them, due to the high randomness and fluctuation of photovoltaic power station output, it will bring challenges to the safe operation and peak-shaving scheduling of power grid, and will also limit the consumption of renewable energy to a great extent.

As the main peak-shaving and frequency modulation power sources in the traditional power grid, hydropower and thermal power generating units constantly change unit output according to the change of system frequency through primary frequency modulation and secondary frequency modulation. However, for photovoltaic power stations, due to their own power generation characteristics, there are some limitations in using traditional frequency modulation methods, which may affect the quality of power grid frequency adjustment and even safe and stable operation. Therefore, in order to adapt to a trend of the increasing proportion of installed capacity of photovoltaic energy in power system and reduce the impact of its large-scale grid connection on the power system, it is an effective means to configure energy storage devices on the grid side to improve the absorptive capacity of wind and light energy. However, in the process of energy storage capacity configuration of hybrid energy storage system, performance and economy need to be balanced. If the balance is not good, the energy of photovoltaic power station will be wasted, which will lead to the reduction of the operating efficiency of hybrid energy storage system.

## SUMMARY

The disclosure provide an optimal configuration method and device for energy storage capacity of an optical storage system, and apparatus and storage medium, so as to at least solve the problem that the operation efficiency of a photovoltaic pow station is reduced due to improper configuration of the energy storage capacity in the related art. The technical scheme of the disclosure is as follows.

According to the first aspect of the embodiment of the disclosure, an optimal configuration method for energy storage capacity of an optical storage system aiming at a step power generation plan is provided and includes:

  obtaining original output data of a photovoltaic power station for step output;
  constructing a model of genetic algorithm, and determining algorithm parameters and a fitness function of the genetic algorithm;
  performing optimization operation based on the genetic algorithm and the original output data to obtain a recommended energy storage capacity, and building an energy storage device according to the recommended energy storage capacity.

Optionally, the algorithm parameters specifically include:
population size Q, crossover probability Pe and mutation probability Pm.

Optionally, a formula of the fitness function is:

$$LCC = ICC - \sum_{n=1}^{N} \frac{d_n}{(1+i)^n} tr + \sum_{n=1}^{N} \frac{a_n}{(1+i)^n} (1-tr) + \sum_{r=1}^{R} \frac{ICC_C}{(1+i)^{rl_c}} (1-tr) - \frac{s}{(1+i)^N} +$$

$$penalty * M;$$

where LCC is total operating cost of the energy storage device, ICC is initial cost of the energy storage device; N is service life of the energy storage device; n is n-th year of operation of the energy storage device; $d_n$ is depreciation of n-th year; I is interest rate; tr is tax rate; $a_n$ is maintenance and operation cost of the energy storage device in n-th year; r is r-th replacement part; R is total replacement times in an operation cycle of the energy storage device; $ICC_C$ is cost of part to be replaced; lc is service life of c-th part to be replaced; s is a residual value (yuan); penalty is electricity amount failing to reach an ideal grid-connected value in one year; M is penalty electricity price; where the total replacement times R is a function of the service life of part to be replaced.

Optionally, a formula of the initial cost ICC of the energy storage device is:

$$ICC = Cost_{battery} \times Capacity_{battery} + Cost_{inverter} \times Capacity_{battery};$$

where $Cost_{battery}$ is cost of energy storage device corresponding to unit energy storage capacity, $Capacity_{battery}$ is an energy storage capacity value, and $Cost_{inverter}$ is cost of inverter corresponding to unit energy storage capacity.

Optionally, a formula of the total replacement times R is:

$$R = floor\left(\frac{N}{l_c}\right) - 1$$

Optionally, performing optimization operation based on the genetic algorithm and the original output data to obtain a recommended energy storage capacity includes:

randomly generating Q energy storage capacity values, and taking the energy storage capacity values as individuals to construct a population X(t);

obtaining fitness function values corresponding to individuals in the population according to the original output data;

performing evolutionary treatment on the population X(t) until the fitness function values of individuals in the population meeting termination optimization conditions, where t is evolution times of the population.

Optionally, the performing evolutionary treatment on the population X(t) includes:

selecting Y/2 pairs of parent individuals from X(t) by using a preset selection operator, where Y is greater than or equal to Q;

determining target parent individual pair of crossover operation for found Y/2 pairs of parent individuals according to the crossover probability Pe, and performing crossover operation to obtain Y individuals;

performing mutation on obtained Y individuals according to the mutation probability Pm respectively to generate Y mutated individuals;

screening Q individuals according to corresponding fitness function values from generated Y mutation individuals to generate a next generation population X(t+1).

Optionally, performing evolutionary treatment on the population X(t) until the fitness function values of individuals in the population meeting termination optimization conditions includes:

if the fitness function values of individuals in population X(t+1) meet the termination optimization conditions, outputting an individual with a largest fitness function value in population X(t+1) as an optimal solution, and stopping evolutionary treatment;

otherwise, continuing to perform evolutionary treatment on the population.

According to a second aspect of the embodiment of the disclosure, an electronic apparatus is provided and includes:

a processor;

a memory for storing instructions executed by the processor;

where the processor is configured to execute the instructions to realize an optimal configuration method for energy storage capacity of an optical storage system aiming at a step power generation plan according to any one of the above-mentioned first aspect.

According to a third aspect of the embodiment of the disclosure, a computer-readable storage medium is provided, where when instructions in the storage medium are executed by a processor of an electronic apparatus, enables the electronic apparatus to execute an optimal configuration method for energy storage capacity of an optical storage system aiming at a step power generation plan according to any one of the above-mentioned first aspect.

According to a fourth aspect of the embodiment of the disclosure, an optimal configuration device for energy storage capacity of an optical storage system aiming at a step power generation plan is provided and includes:

an obtain module, used for obtaining original output data of a photovoltaic power station for step output;

a construction module, used for constructing a model of genetic algorithm, and determining algorithm parameters and a fitness function of the genetic algorithm;

an optimization module, used for performing optimization operation based on the genetic algorithm and the original output data to obtain a recommended energy storage capacity, and building an energy storage device according to the recommended energy storage capacity.

The technical scheme provided by the embodiment of the disclosure has at least the following beneficial effects: by optimizing operation according to genetic algorithm, original output data and fitness function, the recommended energy storage capacity is obtained, which realizes the optimization of energy storage capacity of photovoltaic power station, avoids wasting energy of photovoltaic power station and improves the operation efficiency of energy storage hybrid system.

It is to be understood that both the foregoing general description and the following detailed description are exemplary and explanatory only and are not restrictive of the disclosure.

## BRIEF DESCRIPTION OF THE DRAWINGS

The accompanying drawings here, which are incorporated in and constitute a part of this description, illustrate embodiments consistent with the disclosure and together with the description, serve to explain the principles of the disclosure, and do not unduly limit the disclosure.

FIG. 1 is a flowchart of an optimal configuration method for energy storage capacity of an optical storage system aiming at a step power generation plan according to an exemplary embodiment;

FIG. 2 is a schematic diagram of step output of a photovoltaic power station;

FIG. 3 is a flowchart of an optimal configuration method for energy storage capacity of an optical storage system aiming at a step power generation plan according to an exemplary embodiment;

FIG. 4 is a flowchart of an optimal configuration method for energy storage capacity of an optical storage system aiming at a step power generation plan according to an exemplary embodiment;

FIG. 5 is an optimized pareto diagram by a genetic algorithm according to an exemplary embodiment;

FIG. 6 is a schematic diagram showing the relationship between energy storage capacity and total operating cost and light rejection rate according to an exemplary embodiment;

FIG. 7 is the output data diagram of the energy storage device equipped with an energy storage capacity of 1000MWh;

FIG. 8 is a block diagram of a device according to an exemplary embodiment;

FIG. 9 is a block diagram of a device according to an exemplary embodiment; and

FIG. 10 is a block diagram of an optimal configuration device 1000 for energy storage capacity of an optical storage system aiming at a step power generation plan according to an exemplary embodiment.

## DETAILED DESCRIPTION OF THE EMBODIMENTS

In order to make ordinary skilled in the field better understand the technical scheme of this disclosure, the technical scheme in the embodiment of this disclosure will be described clearly and completely with the attached drawings.

It should be noted that the terms "first" and "second" in the description and claims of this disclosure and the above drawings are used to distinguish similar objects, and are not necessarily used to describe a specific order or sequence. It should be understood that the data so used can be interchanged under appropriate circumstances, so that the embodiments of the disclosure described herein can be implemented in other orders than those illustrated or described herein. The implementations described in the following exemplary embodiments do not represent all implementations consistent with the disclosure. Rather, they are merely examples of devices and methods consistent with some aspects of the disclosure as detailed in the appended claims.

In recent years, with the rapid development of renewable energy power generation technology, it has become an important research direction of power system development to improve the energy allocation structure reasonably and ensure the safe and reliable operation of power network under the background of a large number of new energy sources grid-connected power generation. Among them, due to the high randomness and fluctuation of photovoltaic power station output, it will bring challenges to the safe operation and peak-shaving scheduling of power grid, and will also limit the consumption of renewable energy to a great extent.

As the main peak-shaving and frequency modulation power sources in the traditional power grid, hydropower and thermal power generating units constantly change unit output according to the change of system frequency through primary frequency modulation and secondary frequency modulation. However, for photovoltaic power stations, due to their own power generation characteristics, there are some limitations in using traditional frequency modulation methods, which may affect the quality of power grid frequency adjustment and even safe and stable operation. Therefore, in order to adapt to a trend of the increasing proportion of installed capacity of photovoltaic energy in power system and reduce the impact of its large-scale grid connection on the power system, it is an effective means to configure energy storage devices on the grid side to improve the absorptive capacity of wind and light energy. However, in the process of energy storage capacity configuration of hybrid energy storage system, performance and economy need to be balanced. If the balance is not good, the energy of photovoltaic power station will be wasted, which will lead to the reduction of the operating efficiency of hybrid energy storage system.

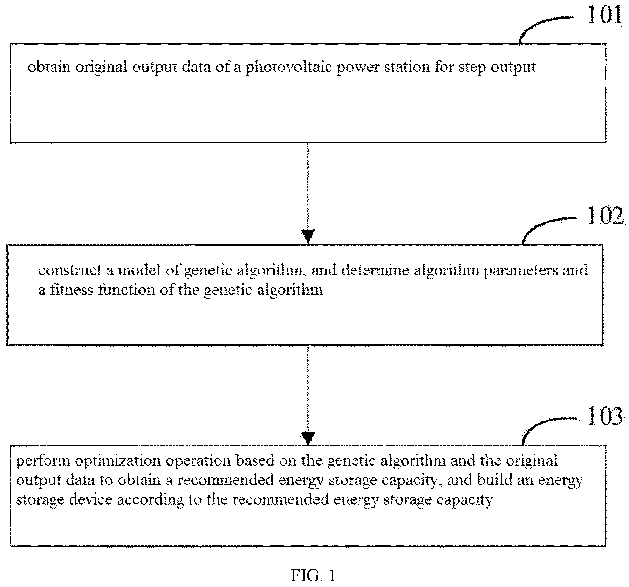

FIG. 1 is a flowchart of an optimal configuration method for energy storage capacity of an optical storage system aiming at a step power generation plan according to an exemplary embodiment. As shown in FIG. 1, the method includes the following steps.

Step 101, original output data of a photovoltaic power station for step output is obtained.

In the embodiment of the disclosure, because the output data of the photovoltaic power station is influenced by the meteorological data around the power station, the meteorological data has the characteristics of randomness, intermittence and fluctuation, and the output data of the photovoltaic power station also has these characteristics, so it is impossible to control the processing data of the photovoltaic power station manually. Therefore, when analyzing the recommended energy storage capacity suitable for the energy storage hybrid system, it is necessary to analyze through the original output data of the photovoltaic power station in the past, the original output data is the active power output by the photovoltaic power station, and the step size of the original output data is 1h (hour).

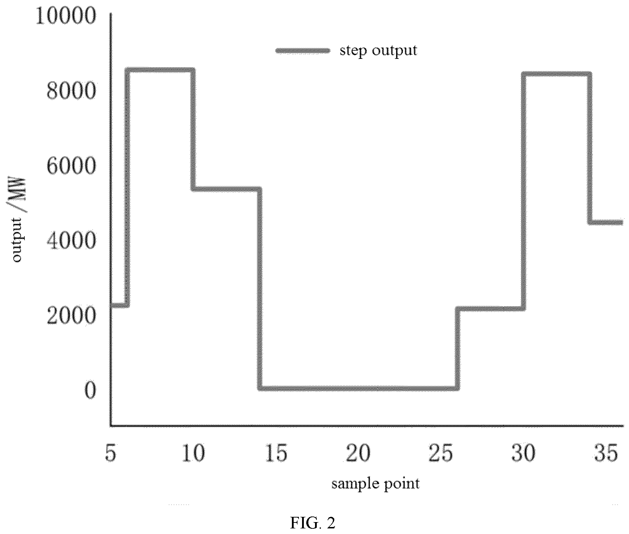

It should be noted that due to the different lighting conditions in different time periods, the corresponding photovoltaic output data, that is, the output power, are very different, so the photovoltaic power station adopts the step output mode to make different outputs in different time periods. FIG. 2 is a schematic diagram of step output of a photovoltaic power station. As shown in FIG. 2, the output corresponding to each sampling point represents the output of the photovoltaic power station within one hour where the sampling point is located.

Step 102, a model of genetic algorithm is constructed, and algorithm parameters and a fitness function of the genetic algorithm are determined.

In the embodiment of the disclosure, the genetic algorithm is used to perform the optimization operation to obtain the appropriate energy storage capacity. The genetic algorithm (GA) originated from the computer simulation research on biological systems and is a random global search optimization method, which simulates the phenomena such as replication, crossover and mutation in natural selection and heredity. Starting from any population, through random selection, crossover and mutation operations, a group of individuals more suitable for the environment is generated, so that the population evolves to better and better areas in the search space, so that generations continue to multiply and evolve, and finally converge to a group of individuals most suitable for the environment, thus obtaining a high-quality solution to the problem. Firstly, the algorithm parameters and fitness function of genetic algorithm need to be set. The algorithm parameters are used to control the process of population evolution of genetic algorithm, and the fitness function is used to judge whether the individuals in the population meet the optimization goal.

Step 103, optimization operation is performed based on the genetic algorithm and the original output data to obtain a recommended energy storage capacity, and an energy storage device is built according to the recommended energy storage capacity.

In the embodiment of the disclosure, a population is generated based on the genetic algorithm, and the individuals in the population are the energy storage capacity values, and the population is evolved based on the original output data until the conditions satisfying stop evolution appear in the population, at which time the fitness function values corresponding to the individuals of the population meet the preset conditions. The optimal energy storage capacity corresponding to the individual is obtained as the recommended energy storage capacity. Then, an energy storage device can be built according to the recommended energy storage capacity, and the built photovoltaic power station meets the optimization target during operation, which not only meets the economy, but also has low operating cost and does not waste the power generation capacity of the photovoltaic power station.

Optionally, the algorithm parameters specifically include:

population size Q, crossover probability Pe and mutation probability Pm.

In the embodiment of this disclosure, the population size is the number of individuals in a population, and in this disclosure, an individual corresponds to an energy storage capacity value. Crossover operation means that two individuals are randomly selected from the population as a pair of parent individuals according to a certain crossover probability Pe, and the excellent characteristics of the parent individuals are passed on to the substring through the exchange and combination of two chromosomes, thus generating new individuals. Common crossover operators include single-point crossover, two-point crossover, multi-point crossover, uniform crossover and arithmetic crossover, and the crossover position is also random. The crossover probability is generally very large, generally 0.6 ~ 0.9. Mutation operation means that each individual in the population changes a small number of genes into allele genes according to a certain mutation probability Pm. Mutation can keep the diversity of population and prevent the loss of important genes, but the mutation probability should not be too large, generally taking 0.001 ~ 0.1.

Optionally, a formula of the fitness function is:

$$LCC = ICC - \sum_{n=1}^{N} \frac{d_n}{(1+i)^n} tr + \sum_{n=1}^{N} \frac{a_n}{(1+i)^n} (1-tr) + \sum_{r=1}^{R} \frac{ICC_C}{(1+i)^{rlc}} (1-tr) - \frac{s}{(1+i)^N} + penalty * M,$$

where LCC is total operating cost of the energy storage device, ICC is initial cost of the energy storage device; N is service life of the energy storage device; n is n-th year of operation of the energy storage device; $d_n$ is depreciation of n-th year; I is interest rate; tr is tax rate; $a_n$ is maintenance and operation cost of the energy storage device in n-th year; r is r-th replacement part; R is total replacement times in an operation cycle of the energy storage device; $ICC_C$ is cost of part to be replaced; Ic is service life of c-th part to be replaced; s is a residual value (yuan); penalty is electricity amount failing to reach an ideal grid-connected value in one year; M is penalty electricity price; where the total replacement times R is a function of the service life of part to be replaced.

In the embodiment of the disclosure, the fitness function is constructed according to the operating cost of the energy storage device, where ICC is the initial cost of the energy storage device, that is, the cost required for purchasing and installing the energy storage device, and ICC is proportional to the energy storage capacity of the energy storage device, and the larger the energy storage capacity, the higher the initial cost required.

The energy storage device will be depreciated every year, and the depreciated price can reduce the total operating cost. $\sum_{n=1}^{N} \frac{a_n}{(1+i)^n} (1-tr)$, it reflects the cost of maintaining and operating the energy storage device from the first year to the N-th year. During the operation cycle of the energy storage device, some parts have a short life and need to be replaced regularly. $\frac{s}{(1+i)^N}$, it reflects the residual value of the energy storage device. The residual value refers to the residual value that can be expected to be recovered when an asset expires, that is, the price that can be collected when the fixed asset is scrapped when it expires. The greater the N, the smaller the residual value. In the power grid, if the energy storage device does not reach the ideal grid-connected value in one year, it will be fined, and the penalty*M reflects the fine in the operation cycle.

Optionally, a formula of the total replacement times R is: $R = floor\left(\frac{N}{l_c}\right) - 1$, the total replacement times of each part to be replaced in the operation cycle of the energy storage device are related to the service life of the part to be replaced, and the specific formula is as follows: $R = floor\left(\frac{N}{l_c}\right) - 1$, floor is a Matlab function, which is used to round a number to the next small integer. Considering the residual value, subtracting 1 is to avoid the last replacement of the energy storage device, so as to reduce the operating cost of the energy storage device.

Optionally, a formula of the initial cost ICC of the energy storage device is:

$$ICC = Cost_{battery} \times Capacity_{battery} + Cost_{inverter} \times Capacity_{battery};$$

where $Cost_{battery}$ is cost of energy storage device corresponding to unit energy storage capacity, $Capacity_{battery}$ is an energy storage capacity value, and $Cost_{inverter}$ is cost of inverter corresponding to unit energy storage capacity.

In the embodiment of the disclosure, since the photovoltaic power station generates direct current and the electric energy transmitted in the power grid is alternating current, the inverter is required to convert the direct current into alternating current when the electric energy is output to the power grid through the energy storage device, and the inverter can convert the variable direct voltage generated by the photovoltaic solar panel into city power supply frequency alternating current, which can be fed back to the commercial power transmission system or used by the off-grid power grid. The capacity of the inverter is proportional to the capacity of the energy storage device, and the larger the energy storage capacity of the energy storage device, the larger the inverter capacity and the higher the cost of the inverter in the initial cost.

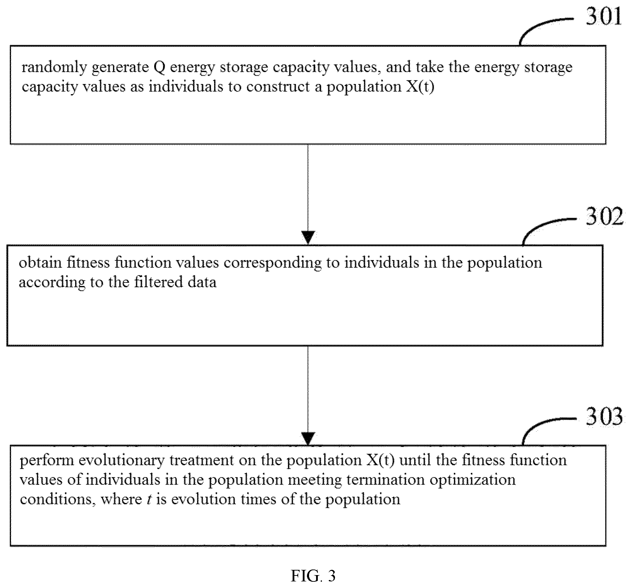

FIG. 3 is a flowchart of an optimal configuration method for energy storage capacity of an optical storage system aiming at a step power generation plan according to an exemplary embodiment. As shown in FIG. 3, step 104 in FIG. 1 specifically includes the following.

Step 301, Q energy storage capacity values are randomly generated, and the energy storage capacity values are taken as individuals to construct a population X(t);

in the embodiment of the disclosure, in the optimization process of the genetic algorithm, firstly, a population and individuals in the population need to be generated.

according to the set population size Q, Q energy storage capacity values, that is, individuals, are randomly generated, and the population X(0) is formed according to these individuals. X(0) is the initial population, and 0 in X(0) represents that the population has not evolved, that is, it has evolved 0 times.

Step 302, fitness function values corresponding to individuals in the population are obtained according to the original output data;
in the embodiment of the disclosure, the fitness function is a mathematical function used to evaluate the merits of an individual, which is generally mapped into a fitness function by an objective function, or directly express the fitness of the individual by the objective function.

Step 303, evolutionary treatment is performed on the population X(t) until the fitness function values of individuals in the population meeting termination optimization conditions, where t is evolution times of the population.

In the embodiment of this disclosure, the genetic algorithm draws lessons from Darwin's biological evolution theory and Mendel's genetic law, and uses the principle of "survival of the fittest" to generate an approximate optimal solution among potential solutions one by one. In each generation of genetic algorithm, individuals are selected according to their fitness values, and a new generation of individuals are generated according to genetic laws. In this process, the fitness of individuals in the population is constantly enhanced, and the obtained solution is also constantly close to the optimal solution. After generating X(0), it is necessary to evolve the population X(0) to obtain the population X(t). Through continuous iterative evolution, the fitness function of individuals in the population is closer to the preset goal.

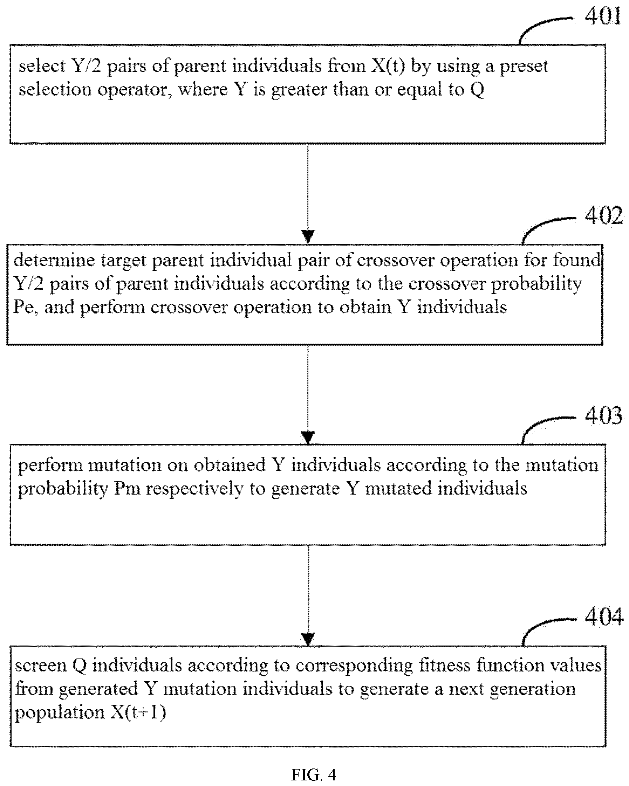

FIG. 4 is a flowchart of an optimal configuration method for energy storage capacity of an optical storage system aiming at a step power generation plan according to an exemplary embodiment. As shown in FIG. 4, the step of performing evolutionary treatment on the population specifically includes the following steps.

Step 401, Y/2 pairs of parent individuals is selected from X(t) by using a preset selection operator, where Y is greater than or equal to Q.

In the embodiment of this disclosure, in a single population evolution process, such as the evolution process of X(t), the process of population reproduction is simulated, and the genetic algorithm will use the following three genetic operators in the process: selection operator, crossover operator and mutation operator. First, we should select two parent individuals to reproduce (generate) offspring (new individuals). We should select Y/2 parent individuals from X(t) through the preset selection operator, and generate new individuals through the parent individuals. Each pair of parent individuals will generate two new individuals. Considering that new individuals need to be screened again, the total number of new individuals should be greater than Q, that is, Y should be greater than or equal to Q. The probability of an individual being selected is related to the fitness function value. The higher the fitness function value of the individual, the greater the probability of being selected. Taking roulette as an example, if the population number is Q and the fitness of individual i is $f_i$,

$$P_i = \frac{f_i}{\Sigma_{k=1}^{Q} f_k}$$

the probability that individual i is selected is: , when the probability of individual selection is given, a uniform random number between [0,1] is generated to decide which individual will participate in mating as a parent individuals. If the selection probability of an individual is high, there is a chance to be selected many times, then its genetic genes will expand in the population; if the individual's selection probability is small, the possibility of being eliminated will be great.

Step 402, target parent individual pair of crossover operation is determined for found Y/2 pairs of parent individuals according to the crossover probability Pe, and crossover operation is performed to obtain Y individuals.

In the embodiment of this disclosure, crossover operation refers to the Y/2 pairs of parent individuals found from the population, and the excellent characteristics of the parent individuals are passed on to the offspring through the exchange and combination of two chromosomes, thus generating new excellent individuals. After obtaining high-quality individuals in the population, some chromosomes between them are exchanged with a certain probability (genetic probability). The crossover probability controls the crossover operation. The larger crossover probability can enhance the genetic algorithm to open up a new search field, but it is more destructive to the solution, generally taking 0.25 ~ 1. According to the crossover probability, the target parent individuals can be selected from the parent individuals, and the crossover operation can be carried out through the crossover operator.

Where, the crossover operator includes the following:

first, two-point crossover or multi-point crossover, that is, two or more crossover points are randomly set for paired chromosomes, and then crossover operation is performed to change the chromosome gene sequence;
second, uniform crossover, that is, each position on the paired chromosome gene sequence crosses with equal probability to form a new gene sequence;
[0002] third, arithmetic crossover, which refers that paired chromosomes are crossed by linear combination to change the chromosome gene sequence;
fourth, single-point crossover operator, which randomly selects a crossover position in the paired chromosomes, and then performs gene bit transformation on the paired chromosomes at the crossover position.

Step 403, mutation is performed on obtained Y individuals according to the mutation probability Pm respectively to generate Y mutated individuals.

In the embodiment of the disclosure, each individual in the population changes a small number of genes into allele genes with mutation probability. Mutation can keep the diversity of population and prevent the loss of important genes, but the mutation probability should not be too large, generally taking 0.001 ~ 0.1. According to the mutation probability, which positions of individuals need to be mutated are determined, and mutation operation is carried out through mutation operators.

In practical application, single point mutation, also called bit mutation, is mainly used, that is, only one bit in an individual's gene sequence needs to be mutated. Take binary coding as an example, that is, 0 becomes 1 and 1 becomes 0.

Step 404, Q individuals are obtained through screening according to corresponding fitness function values from generated Y mutation individuals to generate a next generation population X(t+1).

After the individuals in X(t) are selected, crossed and mutated, a complete evolution process of the population is completed. Q individuals are obtained through screening according to the fitness function value, and these individuals form the next generation population X(t+1). Every time an evolution is made, the number in x () will be increased by 1.

Optionally, performing evolutionary treatment on the population X(t) until the fitness function values of individuals in the population meeting termination optimization conditions includes:

if the fitness function values of individuals in population X(t+1) meet the termination optimization conditions, an individual with a largest fitness function value in population X(t+1) is output as an optimal solution, and evolutionary treatment is stopped;

otherwise, performing evolutionary treatment on the population is continued.

In the embodiment of the disclosure, certain termination optimization conditions are set, for example, the fitness function can be set to be less than a certain preset threshold, and when the fitness function value of the individual in X(t+1) is less than the preset threshold, it means that the operating cost of the energy storage device reaches the expectation, that is, evolution is stopped. Otherwise, it is necessary to continue the evolutionary treatment of the population.

Optionally, besides the total operating cost of the energy storage device mentioned above, the fitness function also includes the relevant formula of light rejection rate:

$$PV\_a = \frac{PV - PV\_plan}{PV};$$

where, PV_a is the light rejection rate, PV is the power generation quantity of photovoltaic power station, and PV_plan is the power quantity absorbed by the power grid. The higher the light rejection rate, the more photovoltaic power generation power is wasted, so the smaller the light rejection rate, the more beneficial it is to save the electric energy of photovoltaic power generation. The target set for the light rejection rate in this embodiment of the disclosure is less than a certain preset threshold.

In order to verify the validity of this method in the disclosure, the 10 million kilowatt photovoltaic power station in Lancang River is selected for analysis.

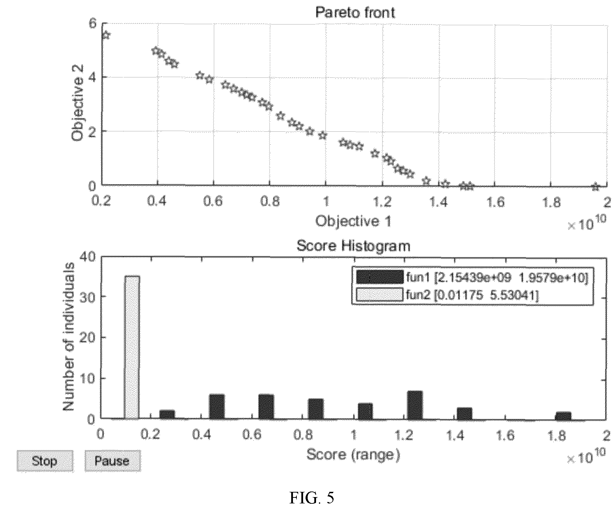

The original output data takes 1h as the time step, and a total of 8760 pieces of photovoltaic output data are selected for one year, and the energy storage capacity is optimized by the above genetic algorithm. FIG. 5 is an optimized pareto diagram by a genetic algorithm according to an exemplary embodiment. As shown in FIG. 5, the light rejection rate of photovoltaic power station is about 0% to 20%, and the total cost fluctuates from 2.3*109 yuan to 1.80*1010 yuan, with the minimum light rejection rate of 0.35%. In the process of reducing the light rejection rate, the cost increases, which reflects the contradiction. In order to further determine the energy storage capacity and consider the economy, this study optimizes the grid-connected value for the optimized capacity with light rejection rate between 5% and 20% once again. After optimization by genetic algorithm, the energy storage capacity with light rejection rate of 5%-20% ranges from 300MWh to 2837MWh. Considering the economy, the energy storage device with energy storage capacity ranging from 500MWh to 2000MWh is selected, that is, it is equipped with 5% to 20% of its capacity relative to the 10 million kilowatts photovoltaic power station. The ideal grid-connected values based on genetic algorithm are optimized under different energy storage capacities respectively.

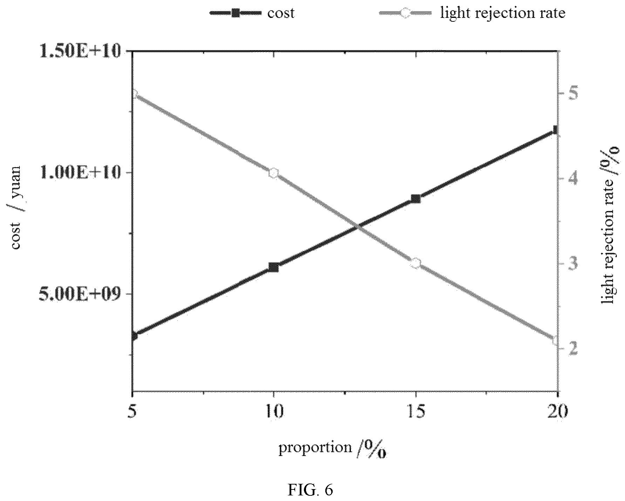

FIG. 6 is a schematic diagram showing the relationship between energy storage capacity and total operating cost and light rejection rate according to an exemplary embodiment. As shown in FIG. 6, the light rejection rate decreases with the increase of the energy storage capacity of the energy storage device, and the cost increases with the increase of the energy storage capacity. When the energy storage capacity is 10% and 15% of the installed capacity of the photovoltaic power station, it shows the best mixing performance, in which the energy storage capacity is increased from 10% to 15%, the light rejection rate is increased by about 1%, while the cost is increased by 3 * 109 yuan. **In** overall consideration, in the scenario in FIG. 5, the energy storage device equipped with 1000MWh for a 10 million kilowatts photovoltaic power station has the best performance.

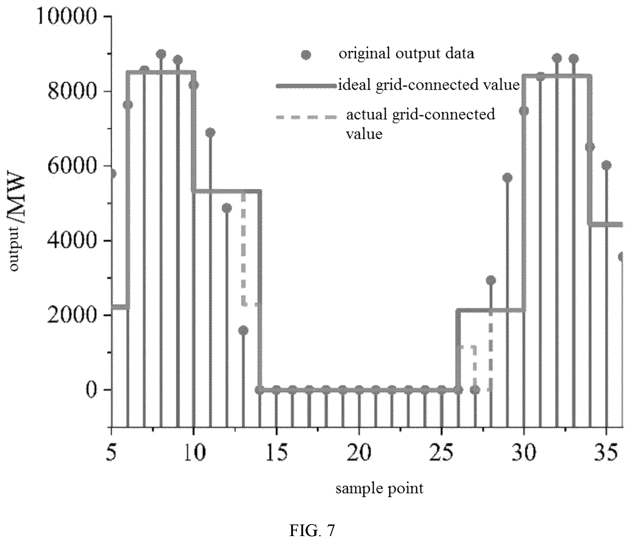

FIG. 7 is the output data diagram of the energy storage device equipped with an energy storage capacity of 1000MWh, in which the overlapping part of the dotted line and the solid line indicates that the actual grid-connected value is consistent with the ideal grid-connected value, and the overlapping part of the dotted line and the solid line indicates that the actual grid-connected value fails to reach or exceed the ideal grid-connected value. It can be seen that in a situation of considering the economy and the light rejection rate comprehensively, the output stability of the energy storage device does not show great fluctuation, and the difference between the actual grid-connected value and the ideal grid-connected value is small, which shows that it is feasible to equip photovoltaic power station with energy storage devices with energy storage capacity of 10% of their installed capacity.

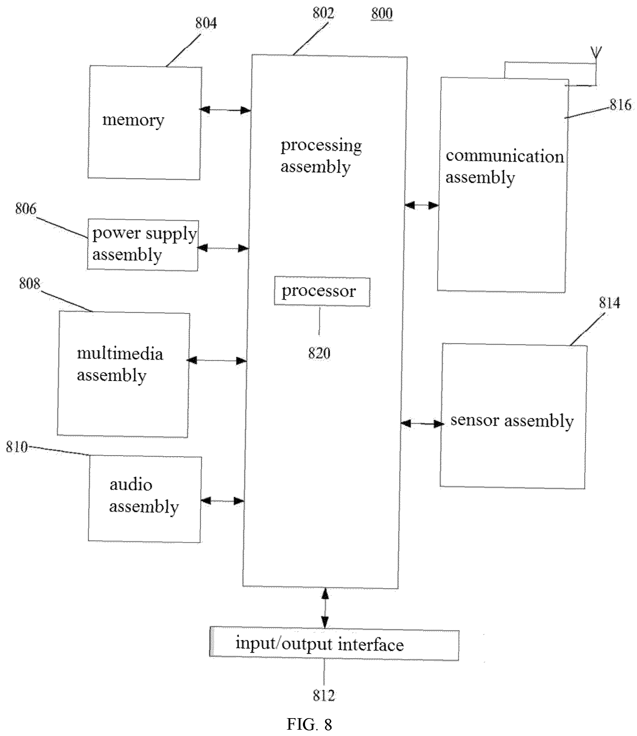

FIG. 8 is a block diagram of a device according to an exemplary embodiment. For example, the device 800 can be a mobile phone, a computer, a digital broadcasting terminal, a messaging transceiver, a game console, a tablet apparatus, a medical apparatus, a fitness apparatus, a personal digital assistant and the like.

Referring to FIG. 8, the device 800 may include one or more of the following parts: a processing part 802, a memory 804, a power part 806, a multimedia part 808, an audio part 810, an input/output (I/O) interface 812, a sensor part 814, and a communication part 816.

The processing part 802 generally controls the overall operation of the device 800, such as operations associated with display, telephone call, data communication, camera operation and recording operation. The processing part 802 may include one or more processors 820 to execute instructions to complete all or part of the steps of the method described above. In addition, the processing part 802 can include one or more modules to facilitate interaction between the processing part 802 and other parts. For example, the processing part 802 can include a multimedia module to facilitate interaction between the multimedia part 808 and the processing part 802.

The memory 804 is configured to store various types of data to support operations at the device 800. Examples of these data include instructions for any application program or method operating on the device 800, contact data, phone book data, messages, pictures, videos, and the like. The memory 804 can be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply part 806 provides power to various parts of the device 800. The power supply part 806 may include a power supply management system, one or more power supplies, and other parts associated with generating, managing and distributing power for the device 800.

The multimedia part 808 includes a screen that provides an output interface between the device 800 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor may not only sense the boundary of a touch or sliding action, but also detect the duration time and pressure related to the touch or sliding operation. **In** some embodiments, the multimedia part 808 includes a front camera and/or a rear camera. When the device 800 is in an operation mode, such as a shooting mode or a video mode, the front camera and/or the rear camera can receive external multimedia data. Each front camera and rear camera can be a fixed optical lens system or have focal length and optical zoom capability.

The audio part 810 is configured to output and/or input an audio signal. For example, the audio part 810 includes a microphone (MIC) configured to receive external audio signals when the device 800 is in an operation mode, such as a call mode, a recording mode and a voice recognition mode. The received audio signal may be further stored in the memory 804 or transmitted via the communication part 816. In some embodiments, the audio part 810 further includes a speaker for outputting audio signals.

I/O interface 812 provides an interface between processing part 802 and peripheral interface modules, the peripheral interface modules can be keyboards, clickwheels, buttons, etc. These buttons may include, but are not limited to, home button, volume button, start button and lock button.

The sensor part 814 includes one or more sensors for providing various aspects of the state evaluation for the device 800. For example, the sensor part 814 can detect the on/off state of the device 800, the relative positioning of parts, for example, the parts are the display and keypad of the device 800, the sensor part can also detect the position change of the device 800 or a part of the device 800, the presence or absence of user contact with the device 800, the orientation or acceleration/deceleration of the device 800 and the temperature change of the device 800. The sensor part 814 may include a proximity sensor configured to detect the presence of a nearby object without any physical contact. The sensor part 814 may also include an optical sensor, such as a CMOS or CCD image sensor, for use in imaging applications. In some embodiments, the sensor part 814 may further include an acceleration sensor, a gyro sensor, a magnetic sensor, a pressure sensor or a temperature sensor.

The communication part 816 is configured to facilitate wired or wireless communication between the device 800 and other devices. The device 800 can access a wireless network based on a communication standard, such as WiFi, an operator network (such as 2G, 3G, 4G or 5G), or a combination thereof. In an exemplary embodiment, the communication part 816 receives a broadcast signal or broadcast related information from an external broadcast management system via a broadcast communication channel. In an exemplary embodiment, the communication part 816 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic parts for performing the above-mentioned methods.

In an exemplary embodiment, there is also provided a storage medium including instructions, such as the memory 804 including instructions, the instructions are executable by the processor 820 of the device 800 to complete the above method. Optionally, the storage medium may be a non-transitory computer-readable storage medium, for example, the non-transitory computer-readable storage medium may be a ROM, a random access memory (RAM), a CD-ROM, a magnetic tape, a floppy disk, an optical data storage device and the like.

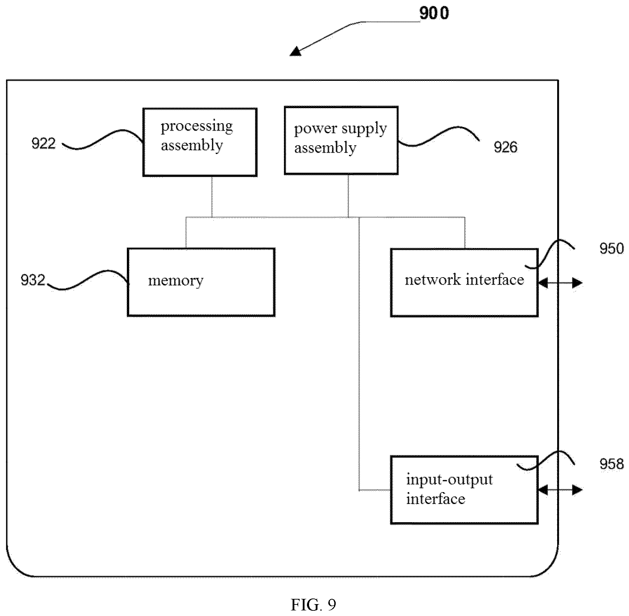

FIG. 9 is a block diagram of an device 900 according to an exemplary embodiment. For example, the device 900 may be provided as a server. Referring to FIG. 9, the device 900 includes a processing part 922, which further includes one or more processors, and memory resources represented by a memory 932 for storing instructions, such as application programs, executable by the processing part 922. The application program stored in the memory 932 may include one or more modules each corresponding to a set of instructions. Furthermore, the processing part 922 is configured to execute instructions to perform the above-described method.

The device 900 may further include a power supply part 926 configured to perform power supply management of the device 900, a wired or wireless network interface 950 configured to connect the device 900 to a network, and an input-output (I/O) interface 958. The device 900 can operate based on an operating system stored in the memory 932, such as Windows ServerTM, Mac OS XTM, UnixTM, LinuxTM, FreeBSDTM or the like.

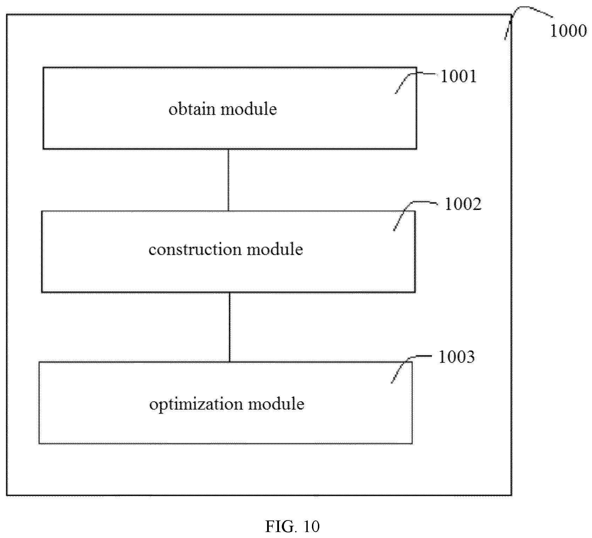

FIG. 10 is an optimal configuration device 1000 for energy storage capacity of an optical storage system aiming at a step power generation plan according to an exemplary embodiment, which includes:

an obtain module 1001, used for obtaining original output data of a photovoltaic power station for step output;
a construction module 1002, used for constructing a model of genetic algorithm, and determining algorithm parameters and a fitness function of the genetic algorithm;
an optimization module 1003, used for performing optimization operation based on the genetic algorithm and the original output data to obtain a recommended energy storage capacity, and building an energy storage device according to the recommended energy storage capacity.

The device can be used to complete all or part of the steps of the above method, which is not repeated here.

Other embodiments of the disclosure will easily occur to those skilled in the art after considering the specification and practicing the disclosure disclosed herein. This disclosure is intended to cover any variations, uses or adaptive changes of this disclosure, which follow the general principles of this disclosure and include common sense or common technical means in this technical field that are not disclosed in this disclosure. The description and embodiments are to be regarded as exemplary only, with the true scope and spirit of the disclosure being indicated by the following claims.

It should be understood that the disclosure is not limited to the precise structure described above and shown in the drawings, and various modifications and changes can be made without departing from its scope. The scope of the disclosure is limited only by the appended claims.

## Claims

1. An optimal configuration method for energy storage capacity of an optical storage system aiming at a step power generation plan, comprising:

obtaining original output data of a photovoltaic power station for step output;
constructing a model of genetic algorithm, and determining algorithm parameters and a fitness function of the genetic algorithm;
performing optimization operation based on the genetic algorithm and the original output data to obtain a recommended energy storage capacity, and building an energy storage device according to the recommended energy storage capacity.

2. The method according to claim 1, wherein the algorithm parameters specifically comprise: population size Q, crossover probability Pe and mutation probability Pm.

3. The method according to claim 2, wherein a formula of the fitness function is:

$$LCC = ICC - \sum_{n=1}^{N} \frac{d_n}{(1+i)^n} tr + \sum_{n=1}^{N} \frac{a_n}{(1+i)^n} (1 - tr) + \sum_{r=1}^{R} \frac{ICC_C}{(1+i)^{rl_c}} (1 - tr) -$$

$$\frac{s}{(1+i)^N} + penalty * M;$$

wherein LCC is total operating cost of the energy storage device, ICC is initial cost of the energy storage device; N is service life of the energy storage device; n is n-th year of operation of the energy storage device; $d_n$ is depreciation of n-th year; I is interest rate; tr is tax rate; $a_n$ is maintenance and operation cost of the energy storage device in n-th year; r is r-th replacement part; R is total replacement times in an operation cycle of the energy storage device; ICCc is cost of part to be replaced; lc is service life of c-th part to be replaced; s is a residual value (yuan); penalty is electricity amount failing to reach an ideal grid-connected value in one year; M is penalty electricity price; wherein the total replacement times R is a function of the service life of part to be replaced.

4. The method according to claim 3, wherein a formula of the initial cost ICC of the energy storage device is:

$$ICC = Cost_{battery} \times Capacity_{battery} + Cost_{inverter} \times Capacity_{battery};$$

wherein $Cost_{battery}$ is cost of energy storage device corresponding to unit energy storage capacity, $Capacity_{battery}$ is an energy storage capacity value, and $Cost_{inverter}$ is cost of inverter corresponding to unit energy storage capacity.

5. The method according to claim 3, wherein a formula of the total replacement times R is:

$$R = floor\left(\frac{N}{l_c}\right) - 1.$$

6. The method according to claim 5, wherein performing optimization operation based on the genetic algorithm and the original output data to obtain a recommended energy storage capacity comprises:

randomly generating Q energy storage capacity values, and taking the energy storage capacity values as individuals to construct a population X(t);
obtaining fitness function values corresponding to individuals in the population according to the original output data;
performing evolutionary treatment on the population X(t) until the fitness function values of individuals in the population meeting termination optimization conditions, wherein t is evolution times of the population.

7. The method according to claim 6, wherein the performing evolutionary treatment on the population X(t) comprises:

selecting Y/2 pairs of parent individuals from X(t) by using a preset selection operator, wherein Y is greater than or equal to Q;
determining target parent individual pair of crossover operation for found Y/2 pairs of parent individuals according to the crossover probability Pe, and performing crossover operation to obtain Y individuals;
performing mutation on obtained Y individuals according to the mutation probability Pm respectively to generate Y mutated individuals;
screening Q individuals according to corresponding fitness function values from generated Y mutation individuals to generate a next generation population X(t+1).

8. The method according to claim 7, wherein performing evolutionary treatment on the population X(t) until the fitness function values of individuals in the population meeting termination optimization conditions comprises:

if the fitness function values of individuals in population X(t+1) meet the termination optimization conditions, outputting an individual with a largest fitness function value in population X(t+1) as an optimal solution, and stopping evolutionary treatment;

otherwise, continuing to perform evolutionary treatment on the population.

9. An electronic device, comprising:

   a processor;

   a memory for storing instructions executed by the processor;

   wherein the processor is configured to execute the instructions to realize an optimal configuration method for energy storage capacity of an optical storage system aiming at a step power generation plan according to any one of claims 1 to 8.

10. A computer-readable storage medium, wherein when instructions in the storage medium are executed by a processor of an electronic device, enables the electronic device to execute an optimal configuration method for energy storage capacity of an optical storage system aiming at a step power generation plan according to any one of claims 1 to 8.

11. An optimal configuration device for energy storage capacity of an optical storage system aiming at a step power generation plan, comprising:

   an obtain module, used for obtaining original output data of a photovoltaic power station for step output;

   a construction module, used for constructing a model of genetic algorithm, and determining algorithm parameters and a fitness function of the genetic algorithm;

   an optimization module, used for performing optimization operation based on the genetic algorithm and the original output data to obtain a recommended energy storage capacity, and building an energy storage device according to the recommended energy storage capacity.

101

obtain original output data of a photovoltaic power station for step output

102

construct a model of genetic algorithm, and determine algorithm parameters and a fitness function of the genetic algorithm

103

perform optimization operation based on the genetic algorithm and the original output data to obtain a recommended energy storage capacity, and build an energy storage device according to the recommended energy storage capacity

FIG. 1

FIG. 2

301

randomly generate Q energy storage capacity values, and take the energy storage
capacity values as individuals to construct a population X(t)

302

obtain fitness function values corresponding to individuals in the population
according to the filtered data

303

perform evolutionary treatment on the population X(t) until the fitness function
values of individuals in the population meeting termination optimization
conditions, where *t* is evolution times of the population

FIG. 3

401

select Y/2 pairs of parent individuals from X(t) by using a preset selection operator, where Y is greater than or equal to Q

402

determine target parent individual pair of crossover operation for found Y/2 pairs of parent individuals according to the crossover probability Pe, and perform crossover operation to obtain Y individuals

403

perform mutation on obtained Y individuals according to the mutation probability Pm respectively to generate Y mutated individuals

404

screen Q individuals according to corresponding fitness function values from generated Y mutation individuals to generate a next generation population X(t+1)

FIG. 4

FIG. 5

FIG. 6

FIG. 7

FIG. 8

**900**

922

processing
assembly

power supply
assembly

926

932

memory

network interface

950

input-output
interface

958

FIG. 9

1000

obtain module ——— 1001

construction module ——— 1002

optimization module ——— 1003

FIG. 10

## INTERNATIONAL SEARCH REPORT

| International application No. |
| --- |
| **PCT/CN2023/083588** |

| A. | CLASSIFICATION OF SUBJECT MATTER |
| --- | --- |

H02J3/28(2006.01)i; H02J3/46(2006.01)i; G06N3/12(2023.01)i

According to International Patent Classification (IPC) or to both national classification and IPC

| B. | FIELDS SEARCHED |
| --- | --- |

Minimum documentation searched (classification system followed by classification symbols)

IPC: H02J, G06N

Documentation searched other than minimum documentation to the extent that such documents are included in the fields searched

Electronic data base consulted during the international search (name of data base and, where practicable, search terms used)

CNTXT; CNABS; WPABS; DWPI; VEN; USTXT; ENTXT; ENTXTC; CNKI: 储能, 容量, 优化, 遗传算法, 参数, 适应度, 种群, 交叉, 变异, energy, storage, capacity, optimal, genetic algorithm, parameter, fitness, population, across, aberrance

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114781266 A (CHINA HUANENG CLEAN ENERGY RESEARCH INSTITUTE et al.) 22 July 2022 (2022-07-22) description, paragraphs 5-174, and figures 1-6 | 1-11 |
| PX | CN 115296318 A (CHINA HUANENG CLEAN ENERGY RESEARCH INSTITUTE) 04 November 2022 (2022-11-04) claims 1-10, description, paragraphs 4-121, and figures 1-9 | 1-11 |
| A | CN 110796287 A (NARI TECHNOLOGY CO., LTD.) 14 February 2020 (2020-02-14) entire document | 1-11 |
| A | CN 108110780 A (ELECTRIC POWER RESEARCH INSTITUTE OF GUANGDONG POWER GRID CO., LTD.) 01 June 2018 (2018-06-01) entire document | 1-11 |
| A | CN 114722728 A (ULANQAB POWER SUPPLY BRANCH COMPANY, INNER MONGOLIA POWER (GROUP) CO., LTD.) 08 July 2022 (2022-07-08) entire document | 1-11 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 June 2023** | **28 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/083588** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2021296902 A1 (KING FAHD UNIVERSITY OF PETROLEUM AND MINERALS) 23 September 2021 (2021-09-23)<br>      entire document | 1-11 |

Form PCT/ISA/210 (second sheet) (July 2022)

**INTERNATIONAL SEARCH REPORT**
Information on patent family members

International application No.

**PCT/CN2023/083588**

| Patent document cited in search report | | | Publication date (day/month/year) | Patent family member(s) | | | Publication date (day/month/year) |
|---|---|---|---|---|---|---|---|
| CN | 114781266 | A | 22 July 2022 | None | | | |
| CN | 115296318 | A | 04 November 2022 | None | | | |
| CN | 110796287 | A | 14 February 2020 | CN | 110796287 | B | 01 April 2022 |
| CN | 108110780 | A | 01 June 2018 | CN | 108110780 | B | 08 December 2020 |
| CN | 114722728 | A | 08 July 2022 | None | | | |
| US | 2021296902 | A1 | 23 September 2021 | None | | | |

Form PCT/ISA/210 (patent family annex) (July 2022)